(19) Europäisches Patentamt
European Patent Office
Office européen des brevets

(11) **EP 4 474 076 A1**

(12) **EUROPEAN PATENT APPLICATION**
published in accordance with Art. 153(4) EPC

(43) Date of publication:
**11.12.2024 Bulletin 2024/50**

(21) Application number: **22924934.7**

(22) Date of filing: **26.10.2022**

(51) International Patent Classification (IPC):
**B22D 17/20** (2006.01)    **B29C 45/17** (2006.01)
**B29C 45/76** (2006.01)

(52) Cooperative Patent Classification (CPC):
**B22D 17/20; B29C 45/17; B29C 45/76**

(86) International application number:
**PCT/JP2022/039975**

(87) International publication number:
**WO 2023/149029 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.02.2022 JP 2022015809**

(71) Applicant: **The Japan Steel Works, Ltd.
Tokyo 141-0032 (JP)**

(72) Inventors:
• **KOSUE, Shogo**
  **Tokyo 141-0032 (JP)**
• **OCHIIWA, Takashi**
  **Tokyo 141-0032 (JP)**
• **HIHARA, Keita**
  **Tokyo 141-0032 (JP)**

(74) Representative: **Simmons & Simmons LLP
(Munich)
Lehel Carré
Gewürzmühlstraße 11
80538 Munich (DE)**

(54) **LIFESPAN PREDICTION METHOD, LIFESPAN PREDICTION DEVICE, AND COMPUTER PROGRAM**

(57)    The present invention involves: acquiring physical quantity data indicating the state of a component that constitutes an industrial machine; determining whether or not the component is normal on the basis of the acquired physical quantity data; and starting lifespan prediction of the component when the component has been determined not to be normal.

FIG.3

Start
→ Acquire vibration acceleration data — S111
→ Store vibration acceleration data and time data — S112
→ Fast Fourier transform — S113
→ Normal? — S114 — YES (loop back), NO ↓
→ Acquire vibration acceleration data — S115
→ Store vibration acceleration data and time data — S116
→ Calculate state indicator — S117
→ Calculate deterioration model — S118
→ Lifespan prediction — S119
→ Output lifespan prediction result — S120
→ Fast Fourier transform processing — S121
→ Normal? — S122 — NO (loop back), YES ↓
→ Stop lifespan prediction processing — S123
→ Stop output of lifespan prediction result — S124

EP 4 474 076 A1

## Description

Technical Field

The present invention relates to a lifespan prediction method, a lifespan prediction device, and a computer program.

Background Art

An injection molding machine includes an injection device that melts and injects a molding material, and a mold clamping device. The injection device includes a heating cylinder including a nozzle at a tip end portion, and a screw rotatably disposed within the heating cylinder in a peripheral direction and an axial direction. The screw is driven by a drive mechanism in a rotational direction and the axial direction. The screw drive mechanism includes a ball screw that converts a rotational drive force of an injection servo motor into a drive force in an axial direction of the screw and transmits the drive force (for example, Patent Literature 1).

Citation List

Patent Literature:

Patent Literature 1: Japanese Patent Laid-Open Publication No. 2019-166702 Summary

Technical Problems

By the way, an inspection estimation time of the ball screw is displayed on the basis of usage conditions and usage time of the injection molding machine. In addition, a failure determination is performed by comparing a vibration acceleration of the ball screw and a failure determination threshold value.

However, even when reaching the inspection estimation time, as described above, a damage state of the ball screw is different for every injection molding machine. In addition, it is difficult to predict a lifespan of the ball screw in simple threshold value determination. This problem may occur not only in the injection molding machine but also in all industrial machines equipped with the ball screw.

An object of the present disclosure is to provide a lifespan prediction method, a lifespan prediction device, and a computer program which are capable of accurately predicting a lifespan of a component constituting industrial machines.

Solution to Problems

A lifespan prediction method according to an aspect of the present disclosure acquires physical quantity data indicating a state of a component constituting an industrial machine; determines whether or not the component is normal on the basis of the acquired physical quantity data; and initiates lifespan prediction of the component in a case where determination is made as abnormal.

A lifespan prediction device according to another aspect of the present disclosure includes: an acquisition unit configured to acquire physical quantity data indicating a state of a component constituting an industrial machine; and an arithmetic operation unit. The arithmetic operation unit determines whether or not the component is normal on the basis of the acquired physical quantity data, and initiates lifespan prediction of the component in a case where the determination is made as abnormal.

A computer program (program product) according to still another aspect of the present disclosure causes a computer to execute processes of acquiring physical quantity data indicating a state of a component constituting an industrial machine; determining whether or not the component is normal on the basis of the acquired physical quantity data; and initiating lifespan prediction of the component in a case where the determination is made as abnormal.

Advantageous Effects of Invention

According to the present disclosure, it is possible to accurately predict a lifespan of a component constituting an industrial machine.

Brief Description of Drawings

Fig. 1 is a schematic view illustrating a configuration example of an injection molding machine according to Embodiment 1.
Fig. 2 is a cross-sectional view illustrating a configuration example of a drive device of the injection molding machine according to Embodiment 1.
Fig. 3 is a flowchart illustrating a processing procedure of a processor according to Embodiment 1.
Fig. 4 is a view illustrating a vibration acceleration signal indicating a state of a ball screw.
Fig. 5A is a view illustrating an FFT signal intensity indicating a state of the ball screw and a normal state determination method.
Fig. 5B is a view illustrating the FFT signal intensity indicating the state of the ball screw and the normal state determination method.
Fig. 6 is a view illustrating a deterioration model of the ball screw and a lifespan prediction method.
Fig. 7 is a schematic view illustrating a configuration example of a control device according to Embodiment 2.

Description of Embodiments

Specific examples of an injection molding machine (lifespan prediction device), a lifespan prediction method, and a computer program according to embodiments of the invention will be described with reference to the accompanying drawings. At least parts of the following embodiments may be combined in any manner. Note that, the invention is represented by the appended claims rather than being limited to exemplification of the embodiments, and is intended to include meaning equivalent to the appended claims and all modifications in the scope.

(Embodiment 1)

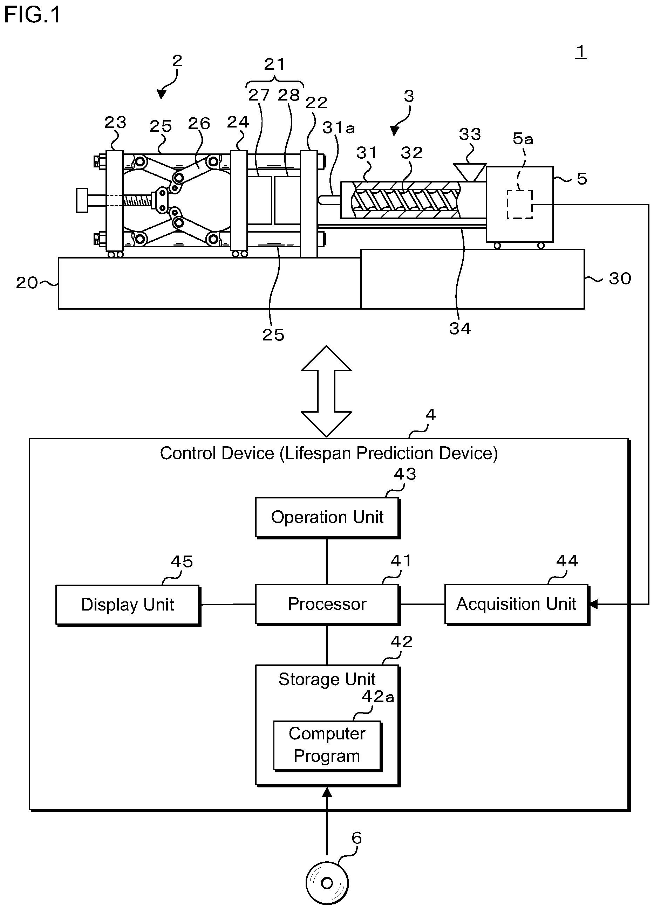

Fig. 1 is a schematic view illustrating a configuration example of an injection molding machine 1 according to Embodiment 1. The injection molding machine 1 according to Embodiment 1 includes a mold clamping device 2 that clamps a mold 21, an injection device 3 that plasticizes and injects a molding material, and a control device 4. The control device 4 functions as a lifespan prediction device according to Embodiment 1.

The mold clamping device 2 includes a stationary platen 22 that is fixed onto a bed 20, a mold clamping housing 23 that is provided slidably on the bed 20, and a movable platen 24 that similarly slides on the bed 20. The stationary platen 22 and the mold clamping housing 23 are connected by a plurality of, for example, four tie bars 25, 25, .... The movable platen 24 is configured to slide between the stationary platen 22 and the mold clamping housing 23. A mold clamping mechanism 26 is provided between the mold clamping housing 23 and the movable platen 24.

The mold clamping mechanism 26 is constituted, for example, by a toggle mechanism. Note that, the mold clamping mechanism 26 may be constituted by a direct pressure type clamping mechanism, that is, a mold clamping cylinder. The stationary platen 22 and the movable platen 24 are provided with a stationary mold 21a and a movable mold 21b, respectively, and when the mold clamping mechanism 26 is driven, the mold 21 is opened or closed.

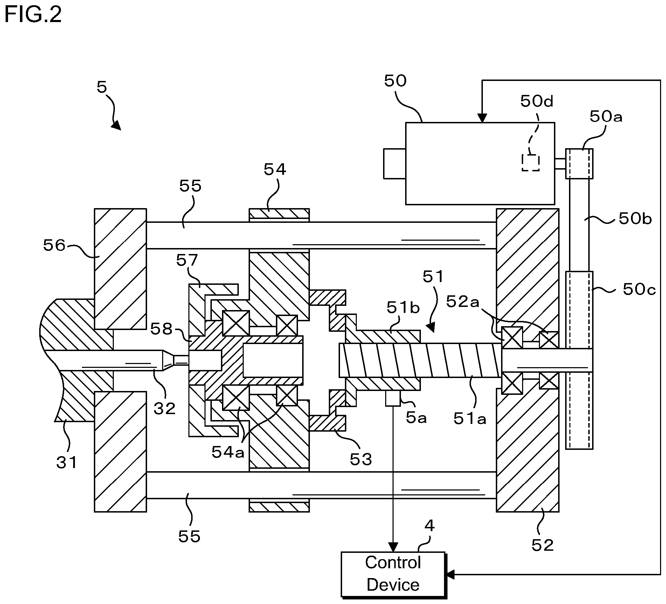

The injection device 3 is provided on a base 30. The injection device 3 includes a heating cylinder 31 including a nozzle 31a at a tip end portion, and a screw 32 that is disposed rotatably in the peripheral direction and the axial direction in the heating cylinder 31. A heater for melting a molding material is provided at the inside or at the periphery of the heating cylinder 31. The screw 32 is driven in the rotational direction and the axial direction by a drive device 5 including a ball screw 51 (refer to Fig. 2).

A hopper 33 into which the molding material is put is provided in the vicinity of a rear end of the heating cylinder 31. In addition, the injection molding machine 1 includes a nozzle touch device 34 that moves the injection device 3 in a front and rear direction (right and left direction in Fig. 1). When the nozzle touch device 34 is driven, the injection device 3 advances and the nozzle 31a of the heating cylinder 31 touches an adhesion portion of the stationary platen 22.

The control device 4 is a computer that controls the operation of the mold clamping device 2 and the injection device 3, and includes the processor (arithmetic operation unit) 41, a storage unit 42, an operation unit 43, an acquisition unit 44, a display unit 45, and the like as a hardware configuration. Note that, the control device 4 may be a server device that is connected to a network. In addition, the control device 4 may be constituted by a plurality of computers and perform distributed processing, may be realized by a plurality of virtual machines provided in one server, or may be realized by using a cloud server.

The processor 41 includes an arithmetic operation circuit such as a central processing unit (CPU), a multi-core CPU, a graphics processing unit (GPU), a generalpurpose computing on graphics processing unit (GPGPU), tensor processing unit (TPU), an application specific integrated circuit (ASIC), a field-programmable gate array (FPGA), and a neural processing unit (NPU), an internal storage device such as a read only memory (ROM) and a random access memory (RAM), a I/O terminal, a time measurement unit, and the like. The processor 41 performs a lifespan prediction method according to Embodiment 1 by executing a computer program (program product) 42a stored in the storage unit 42 to be described later. In addition, the respective functional units of the control device 4 may be realized in a software manner, or a part or the entirety thereof may be realized in a hardware manner.

The storage unit 42 is a non-volatile memory such as a hard disk, an electrically erasable programmable ROM (EEPROM), and a flash memory. The storage unit 42 stores the computer program 42a for causing a computer to execute a lifespan prediction process of the ball screw 51.

The computer program 42a according to Embodiment 1 may be computerreadably recorded in a recording medium 6. The storage unit 42 stores the computer program 42a read out from the recording medium 6 by a reading device. The recording medium 6 is a semiconductor memory such as a flash memory. In addition, the recording medium 6 may be an optical disc such as a compact disc (CD)-ROM, a digital versatile disc (DVD)-ROM, and a Blu-ray (registered trademark) disc (BD). In addition, the recording medium 6 may be a magnetic disk such as a flexible disk and a hard disk, a magnetooptical disk, and the like.

Furthermore, the computer program 42a according to Embodiment 1 may be downloaded from an external server that is connected to a communication network, and may be stored in the storage unit 42.

The operation unit 43 is an input device such as a touch panel software key, a hardware key, a keyboard, and a mouse.

The acquisition unit 44 performs A/D conversion on a rotation angle signal output from an encoder 50d and a vibration acceleration signal output from a vibration acceleration sensor 5a to be described later, and acquires rotation angle data and vibration acceleration data.

The display unit 45 is a liquid crystal panel, an organic EL display, electronic paper, a plasma display, or the like. The display unit 45 displays various pieces of information corresponding to image data given from the processor 41.

Setting values which determine molding conditions such as an injection initiation time, a resin temperature in a mold, a nozzle temperature, a cylinder temperature, a hopper temperature, a mold clamping force, an injection speed, an injection acceleration, an injection peak pressure, and an injection stroke are set to the injection molding machine 1.

In addition, setting values which determine molding conditions such as a cylinder tip end resin pressure, a reverse prevention ring seating state, a pressure-holding switching pressure, a pressure-holding switching speed, a pressure-holding switching position, a pressure-holding completion position, a cushion position, a metering back pressure, and a metering torque are set to the injection molding machine 1.

Furthermore, setting values which determine molding conditions such as a metering completion position, a screw retraction speed, a cycle time, a mold closing time, an injection time, a pressure-holding time, a metering time, and a mold opening time are set to the injection molding machine 1. Then, the injection molding machine 1 to which the setting values are set operates in accordance with the setting values.

Fig. 2 is a cross-sectional view illustrating a configuration example of the drive device 5 of the injection molding machine 1 according to Embodiment 1. The drive device 5 includes an injection servo motor 50 and the ball screw 51 for driving the screw 32 in the axial direction. The injection servo motor 50 is provided with the encoder 50d that detects a rotation angle and outputs a rotation angle signal indicating the rotation angle to the control device 4. The control device 4 controls rotation of the injection servo motor 50 on the basis of the rotation angle signal output from the encoder 50d. A small pulley 50a is provided to an output shaft of the injection servo motor 50.

The ball screw 51 includes a ball screw shaft 51a, and a nut 51b screwed to the ball screw shaft 51a. A base end portion of the ball screw shaft 51a is rotatably supported to a first plate 52 including a hole and a bearing seat through a bearing 52a. A large pulley 50c is provided in the base end portion of the ball screw shaft 51a. The small pulley 50a and the large pulley 50c are connected to each other by a timing belt 50b, and a rotational force of the small pulley 50a is transmitted at a reduced speed to the large pulley 50c, and thus the ball screw shaft 51a rotates.

Hereinafter, a direction on the base end side of the ball screw shaft 51a (right side in Fig. 1 and Fig. 2) is referred to as a retraction direction, and an opposite direction (a left direction in Fig. 1 and Fig. 2) is referred to as an advancing direction. In addition, the advancing direction and the retraction direction are collectively referred to as an advancing and retraction direction. When the injection servo motor 50 is driven and the large pulley 50c and the ball screw shaft 51a rotate, the nut 51b moves in the advancing direction or the retraction direction in correspondence with the rotation direction.

A load cell 53 is provided on a surface on an advancing direction side of the nut 51b, and a surface on an advancing direction side of the load cell 53 is fixed to a second plate 54. A plurality of through-holes are formed in the second plate 54, and a guide shaft 55 is inserted into each of the through-holes. The second plate 54 is guided by the guide shaft 55 and moves in the advancing and retraction direction. A third plate 56 is provided on an advancing direction side of the first plate 52, and one end and the other end of the guide shaft 55 are supported by the first plate 52 and the third plate 56, respectively. When the ball screw shaft 51a rotates, the nut 51b, the load cell 53, and the second plate 54 integrally move in the advancing and retraction direction along the guide shaft 55.

A hole and a bearing seat are provided in the second plate 54, and an output shaft 58 is supported to the hole through a bearing 54a. A plasticizing pulley 57 is provided in the output shaft 58. The plasticizing pulley 57 is connected to a pulley attached to a screw rotation motor (not illustrated) through a timing belt (not illustrated). A rotation center of the output shaft 58 matches a rotation center of the ball screw shaft 51a. The output shaft 58 is formed with a recessed portion into which a tip end portion of the ball screw shaft 51a intrudes when the nut 51b is advanced or retracted.

In addition, one end of the screw 32 is fixed to the output shaft 58 so that central axes match each other. A through-hole into which the screw 32 is inserted is formed in the third plate 56. One end of the heating cylinder 31 is fixed to the third plate 56 so that the screw 32 inserted into the through-hole of the third plate 56 can move in an axial direction at the inside of the heating cylinder 31.

In addition, a vibration acceleration sensor 5a that detects vibration of the nut 51b is attached to the nut 51b of the ball screw 51. The vibration acceleration sensor 5a outputs a detected vibration acceleration signal to the control device 4. The processor 41 of the control device 4 performs A/D conversion on the vibration acceleration signal output from the vibration acceleration sensor 5a into vibration acceleration data and acquires the vibration acceleration data by using the acquisition unit 44. The control device 4 can predict the lifespan of the ball screw 51 on the basis of the vibration acceleration data.

The outline of a molding process cycle is as follows, and the control device 4 performs lifespan prediction processing of the ball screw 51 in a repeated molding process cycle. During injection molding, a mold closing process, a mold clamping process, an injection unit advancing process, an injection process, a metering process, an injection unit retracting process, a mold opening process, and an eject process which are well known are sequentially performed.

<Lifespan Prediction Method>

Description will be given of a lifespan prediction method of the ball screw 51 provided in the injection molding machine 1 configured as described above. In the ball screw 51, foreign matters get caught between the ball screw shaft 51a and the nut 51b, minute scratches are caused on a screw surface, and when a ball passes through a scratched site, the screw surface is peeled from the site. In addition, when the ball steps peeled foreign matters, new scratches are created, and wear progresses at an accelerating rate.

Accordingly, it is very difficult to predict the lifespan by monitoring the vibration of the ball screw 51 until the first scratch that has an influence on the lifespan of the ball screw 51 is formed. Furthermore, in a case where the lifespan is predicted by using accumulated vibration acceleration data of the ball screw 51 without considering occurrence of an event that has an influence on the lifespan of the ball screw 51, the accuracy of lifespan prediction will decrease.

In the injection molding machine 1, a resin containing glass fiber or metal powders may be used, and the glass fiber or the metal powders are likely to get caught in the ball screw 51 and cause scratches. That is, the ball screw 51 of the injection molding machine 1 is in an environment in which the lifespan prediction is difficult.

The control device (lifespan prediction device) 4 of the present disclosure performs lifespan prediction of the ball screw 51 by two-step determination algorithm using a normal state determination algorithm and a lifespan prediction algorithm.

The normal state determination algorithm is an algorithm that determines whether or not the ball screw 51 is normal. That is, the normal state determination algorithm detects occurrence of an event that causes the wear of the ball screw 51 to progress at an accelerated rate. The ball screw 51 starts to deteriorate due to the occurrence of the event. In Embodiment 1, description will be given of an example in which a determination is made as to whether or not the ball screw 51 is normal by comparing a magnitude of a frequency component of vibration acceleration data in a specific frequency band and a threshold value. Details will be described later.

The lifespan prediction algorithm is an algorithm that performs lifespan prediction of the ball screw 51 on the basis of the vibration acceleration data indicating vibration of the ball screw 51 in which the above-described event occurs. In Embodiment 1, description will be given of an example in which the lifespan is predicted by remaining useful life (RUL) estimation using a deterioration model of a state indicator (index value) correlated with the lifespan of the ball screw 51. Details will be described later.

The two-step determination algorithm detects initiation of deterioration of the ball screw 51 (a scratch of the nut 5 1b) by using the normal state determination algorithm at an initial stage. When the deterioration of the ball screw 51 initiates, wear and deterioration of the ball screw 51 progress at an accelerated rate. During the wear and the deterioration progress, since a vibration state of the ball screw 51 varies, it is possible to accurately predict the lifespan of the ball screw 51 by using the lifespan prediction algorithm.

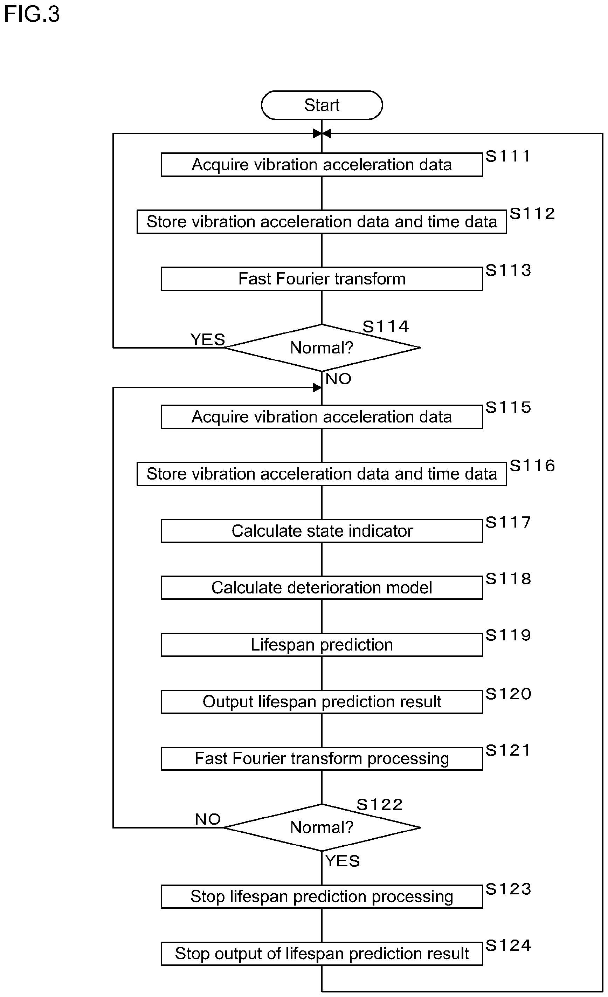

Fig. 3 is a flowchart illustrating a processing procedure of the processor 41 according to Embodiment 1. Step S111 to step S114 are processes corresponding to the normal state determination algorithm. Step S115 to step S119 are processes corresponding to the lifespan prediction algorithm.

The processor 41 acquires vibration acceleration data indicating a state of the ball screw 51 from the vibration acceleration sensor 5a via the acquisition unit 44 (step S111).

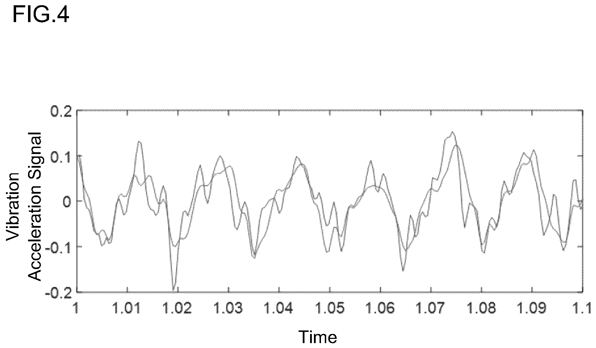

Fig. 4 is a view illustrating a vibration acceleration signal indicating the state of the ball screw 51. In the graph shown in Fig. 4, the horizontal axis represents time, and the vertical axis represents the vibration acceleration signal output from the vibration acceleration sensor 5a. The processor 41 causes the acquisition unit 44 to perform A/D conversion on the vibration acceleration signal into vibration acceleration data, and acquires the vibration acceleration data.

Next, the processor 41 stores the acquired vibration acceleration data, and time data indicating time when acquiring the vibration acceleration data in the storage unit 42 in association with each other (step S112). The time data can be obtained by a time measurement unit.

Next, the processor 41 performs fast Fourier transform on the vibration acceleration data and the time data stored in the storage unit 42 (step S113). A frequency component of the vibration acceleration data can be obtained by the fast Fourier transform. Hereinafter, the magnitude of the frequency component is referred to as fast Fourier transform (FFT) signal intensity.

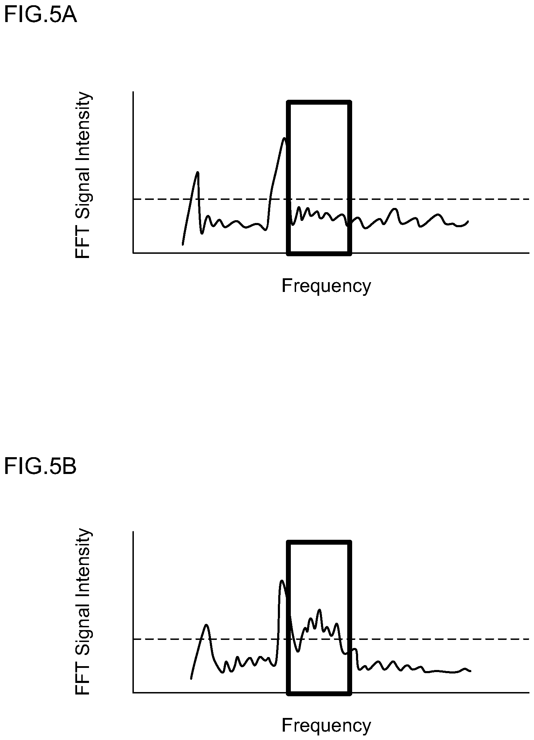

Fig. 5A and Fig. 5B are views illustrating the FFT signal intensity indicating a state of the ball screw 51 and a normal state determination method. In graphs shown in Fig. 5A and Fig. 5B, the horizontal axis represents a frequency and the vertical axis represents the FFT signal intensity. Fig. 5A illustrates an FFT signal intensity obtained from a normal ball screw 51. Fig. 5B illustrates an FFT signal intensity obtained from an abnormal ball screw 51. That is, Fig. 5B illustrates the FFT signal intensity obtained when an event that is the cause for an accelerated progress in the wear of the ball screw 51 occurs.

When the nut 51b is scratched, a value of the FFT signal intensity in a specific frequency band indicated by a rectangular frame in Fig. 5A and Fig. 5B increases overall. In Fig. 5A and Fig. 5B, a broken line indicates a threshold value for determining whether or not the ball screw 51 is normal. The specific frequency band and the threshold value can be obtained experimentally by using a normal ball screw 51. The storage unit 42 stores the specific frequency band and the threshold value.

The processor 41 that terminates the processing in step S113 determines whether or not the ball screw 51 is normal by comparing the FFT signal intensity of the specific frequency band and the threshold value (step S114). For example, in a case where an average value of the FFT signal intensity in the specific frequency band is less than the threshold value, the processor 41 determines that the ball screw 51 is normal. In a case where the average value of the FFT signal intensity in the specific frequency band is equal to or greater than the threshold value, the processor 41 determines that the ball screw 51 is abnormal.

In a case where it is determined that the ball screw 51 is normal (step S114: YES), the processor 41 returns the processing to step S111, and subsequently performs normal state determination processing of determining whether or not the ball screw 51 is normal.

In a case where it is determined that the ball screw 51 is abnormal (step S114: NO), the processor 41 acquires the vibration acceleration data from the vibration acceleration sensor 5a in order to perform lifespan prediction of the ball screw 51 (step S115). The processor 41 stores the obtained vibration acceleration data, and time data indicating time when acquiring the vibration acceleration data in the storage unit 42 in association with each other (step S116).

Next, the processor 41 calculates a state indicator (index) correlated with the lifespan of the ball screw 51 on the basis of the vibration acceleration data accumulated in the storage unit 42 (step S117). The state indicator is, for example, a peak value of the vibration acceleration data. The vibration acceleration data that is used in the lifespan prediction is the vibration acceleration data accumulated after a point of time when the ball screw 51 is determined as being abnormal.

The processor 41 calculates a deterioration model for estimating a variation over time of the state indicator correlated with the lifespan of the ball screw 51 on the basis of the state indicator on the basis of the vibration acceleration data and the time data which are stored in the storage unit 42 (step S118). The deterioration model is a function indicating a relationship between usage time and a state indicator. The deterioration model can be obtained by a maximum likelihood estimation method.

The function related to the deterioration model is expressed, for example, by the following Expression (1).

$$P = a \times e^{bt} + c \ldots (1)$$

Provided that,
P: state indicator
t: usage time
a, b, and c: coefficients.

The processor 41 obtained the deterioration model by calculating the coefficients a, b, and c with which an average square error becomes minimum. A confidence interval of the deterioration model can also be obtained by the same method.

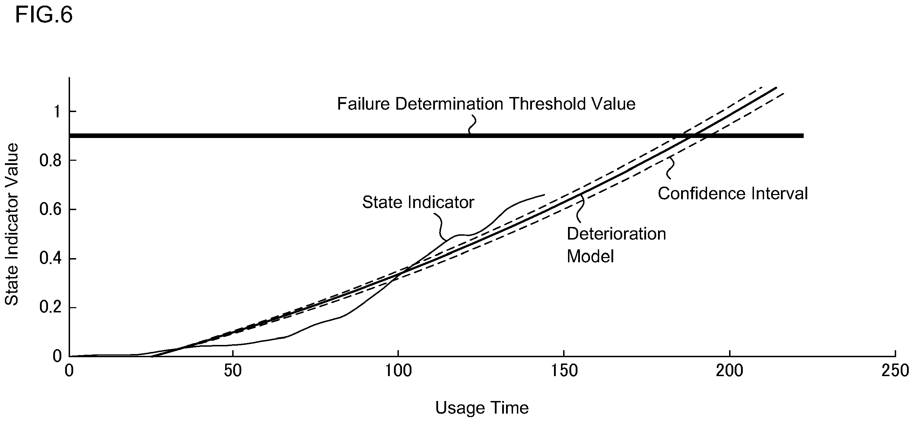

Fig. 6 is a view illustrating the deterioration model and the lifespan prediction method of the ball screw 51. In the graph shown in Fig. 6, the horizontal axis represents usage time of the ball screw 51, and the vertical axis represents the state indicator of the ball screw 51. An irregularly increasing line represents a variation over time in the state indicator. A smooth curve is the deterioration model of the ball screw 51, and a broken line represents the confidence interval of the deterioration model. A bold line is a failure determination threshold value. The failure determination threshold value is a value of the state indicator when the ball screw 51 fails.

It is possible to predict the lifespan of the ball screw 51 by obtaining usage time when the state indicator exceeds the failure determination threshold value by using the deterioration model. Note that, the failure determination threshold value can be obtained experimentally by using a scratched ball screw 51. The storage unit 42 stores the failure determination threshold value.

Next, the processor 41 performs the lifespan prediction of the ball screw 51 by using the deterioration model (step S119). For example, the processor 41 can estimate a point of time when the state indicator calculated by using the deterioration model reaches the failure determination threshold value as failure time. The processor 41 can obtain remaining durable time by subtracting the current usage time from the failure time.

Next, the processor 41 outputs a lifespan prediction result (step S120). For example, the processor 41 displays the failure time or the remaining durable time on the display unit 45. The processor 41 may display a graph as shown in Fig. 6 on the display unit 45.

Next, the processor 41 performs fast Fourier transform on the vibration acceleration data as in step S113 and step S114 (step S121), and determines whether or not the ball screw 51 is normal (step S122). That is, the processor 41 determines whether or not the ball screw 51 is normal even during the lifespan prediction.

In a case where it is determined that the ball screw 51 is abnormal (step S122: NO), the processor 41 returns the processing to step S115, and continues the lifespan prediction processing.

In a case where it is determined that the ball screw 51 is normal (step S122: YES), the processor 41 stops the lifespan prediction processing (step S123), stops output of the lifespan prediction result (step S124), and returns the processing to step S111.

As described above, according to the injection molding machine 1 according to Embodiment 1, it is possible to accurately predict the lifespan of the ball screw 51 of the injection molding machine 1. Specifically, it is possible to accurately predict the lifespan of the ball screw 51 by the two-step determination algorithm using the normal state determination algorithm and the lifespan prediction algorithm.

In a case where the ball screw 51 is in a normal state, that is, in a case where accurate lifespan prediction of the ball screw 51 is difficult, the processor 41 does not perform the lifespan prediction and does not display a lifespan prediction result on the display unit 45. An operator of the injection molding machine 1 can recognize that the ball screw 51 is not in a state in which deterioration will progress. The operator can use the injection molding machine 1 with peace of mind until the ball screw 51 is out of the normal state.

When the ball screw 51 is out of the normal state, the processor 41 initiates the lifespan prediction of the ball screw 51 with the lifespan prediction algorithm, and displays a lifespan prediction result on the display unit 45. The operator can recognize that the ball screw 51 is in a state in which deterioration proceeds. The operator can know the lifespan of the ball screw 51 by the lifespan prediction result displayed on the display unit 45.

Since the processor 41 initiates the lifespan prediction of the ball screw 51 in a state in which wear of the ball screw 51 proceeds and the state indicator may vary, it is possible to predict the lifespan of the ball screw 51 more accurately. That is, as compared with a case where the lifespan prediction is initiated from a state in which the ball screw 51 is normal, the processor 41 can predict the lifespan of the ball screw 51 more accurately.

In addition, according to the processing from step S121 to step S124, even in a case where the lifespan prediction processing is initiated due to erroneous determination, it is possible to stop the lifespan prediction and return the processing to state monitoring processing of the ball screw 51. It is possible to prevent the lifespan prediction processing from continuing even though the ball screw 51 is in the normal state, and prevent a lifespan prediction result with low prediction accuracy or an erroneous lifespan prediction result from being output.

In a case where it is determined that the ball screw 51 is normal during the lifespan prediction processing, the processor 41 temporarily stops the lifespan prediction processing and the lifespan prediction result output processing. In a case where it is determined that the ball screw 51 is abnormal again, since the processor 41 initiates the lifespan prediction processing again from the beginning, it is possible to prevent lifespan prediction accuracy from decreasing. Even in a case where the state of the ball screw 51 is erroneously determined, it is possible to accurately predict the lifespan of the ball screw 51.

In addition, the ball screw 51 is replaced, the processor 41 can return to the state monitoring state of the ball screw 51 without executing special processing.

Note that, the normal state determination algorithm described in Embodiment 1 is illustrative only, and the control device 4 may be configured so that a determination is made as to whether or not the ball screw 51 is normal by using a peak value or other statistical values of the FFT signal intensity.

In addition, the processor 41 may determine whether or not the ball screw 51 is normal by acquiring drive current data of the injection servo motor 50 by using a current sensor. The processor 41 performs the above-described determination by comparing an average value, a peak value, or other statistical values of the FFT signal intensity obtained by performing fast Fourier transform on the drive current data, and a threshold value with each other.

The processor 41 may determine whether or not the ball screw 51 is normal by acquiring torque data of the injection servo motor 50 by using a torque sensor. The processor 41 performs the above-described determination by comparing an average value, a peak value, or other statistical values of FFT signal intensity obtained by performing fast Fourier transform on the torque data, and a threshold value with each other.

The processor 41 may determine whether or not the ball screw 51 is normal by comparing an average value, a peak value, or other statistical values of FFT signal intensity obtained by performing fast Fourier transform on drive control quantity data, and a threshold value with each other.

The processor 41 may determine whether or not the ball screw 51 is normal by acquiring drive sound data of the injection servo motor 50 by using a microphone. The processor 41 performs the above-described determination by comparing an average value, a peak value, or other statistical values of the FFT signal intensity obtained by performing fast Fourier transform on the drive sound data, and a threshold value with each other.

A determination may be made as to whether or not the ball screw 51 is normal by using a state determination learning model trained to output data indicating whether or not the ball screw 51 is normal in a case where the vibration acceleration data indicating vibration of the ball screw 51 is input.

The control device 4 may be configured to determine whether or not the ball screw 51 is normal by using a state determination learning model trained to output data indicating whether or not the ball screw 51 is normal in a case where drive current data of the injection servo motor 50 is input.

The control device 4 may be configured to determine whether or not the ball screw 51 is normal by using a state determination learning model trained to output data indicating whether or not the ball screw 51 is normal in a case where the torque data of the injection servo motor 50 is input.

The control device 4 may be configured to determine whether or not the ball screw 51 is normal by using a state determination learning model trained to output data indicating whether or not the ball screw 51 is normal in a case where drive control quantity data of the injection servo motor 50 is input.

The control device 4 may be configured to determine whether or not the ball screw 51 is normal by using a state determination learning model trained to output data indicating whether or not the ball screw 51 is normal in a case where drive sound data of the ball screw 51 is input.

A plurality of kinds of the normal state determination algorithm may be prepared, and a determination may be made as to whether or not the ball screw 51 is normal by selectively using the normal state determination algorithms. For example, the processor 41 may make a determination by using the plurality of kinds of normal state determination algorithms, and in a case where it is determined as being abnormal by a predetermined number of normal state determination algorithms, the processor 41 may determine that the ball screw 51 is abnormal. Furthermore, a determination may be made as to whether or not the ball screw 51 is normal by using a weighted average value of determination results obtained by using the plurality of kinds of normal state determination algorithms.

The lifespan prediction algorithm described in the embodiment is illustrative only, the deterioration model may be created by using the drive current data of the injection servo motor 50, the drive control quantity data, the torque data, the drive sound data obtained from the ball screw 51, or the like. The processor 41 predicts the lifespan of the ball screw 51 by using the deterioration model.

The peak value of the vibration acceleration data is merely an example of a state indicator, and other values on the basis of the vibration acceleration data may be used as a state indicator. An average value, a peak value, or other statistical quantitys of the FFT signal intensity of the vibration acceleration data in a specific frequency band may be used as the state indicator.

The lifespan of the ball screw 51 may be predicted in combination of a plurality of kinds of lifespan prediction algorithms in a similar manner as in the normal state determination algorithm.

In addition, in Embodiment 1, description has been given of an example in which the lifespan prediction of the ball screw 51 is performed, but lifespan prediction of other components constituting the mold clamping device 2 and the injection device 3 may be performed.

In addition, physical quantity data indicating a state of a component constituting an industrial machine other than the injection molding machine 1 may be acquired, and the lifespan of the component may be predicted. Note that, the industrial machine includes an extruder, and any other devices used in an industrial field.

(Embodiment 2)

An injection molding machine 1 according to Embodiment 2 is different from Embodiment 1 in that the lifespan of the ball screw 51 is predicted by machine learning. Other processing contents other than the lifespan prediction algorithm are similar as in Embodiment 1. Since the other configurations of the injection molding machine 1 are similar to the injection molding machine 1 according to Embodiment 1, the same reference numeral will be given to the same site, and detailed description thereof will be omitted.

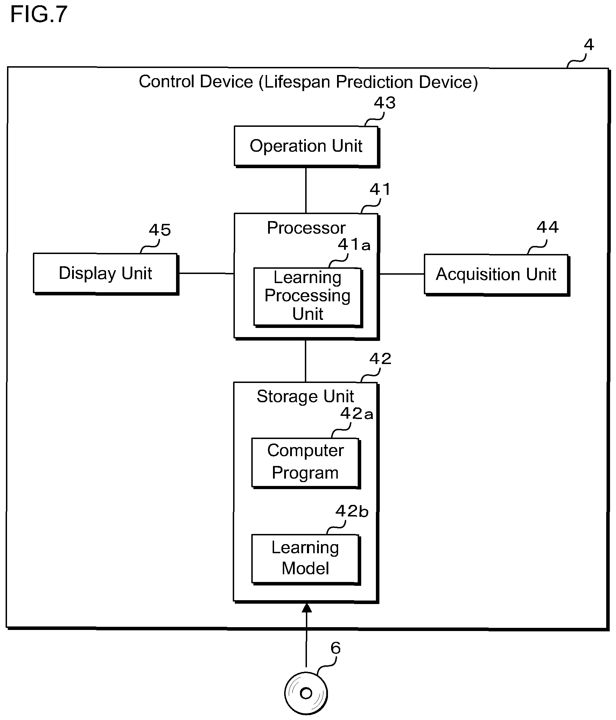

Fig. 7 is a schematic view illustrating a configuration example of a control device 4 according to Embodiment 2. The processor 41 of the control device 4 according to Embodiment 2 includes a learning processing unit 41a as a functional unit. In addition, the storage unit 42 stores a learning model 42b for predicting remaining durable time of the ball screw 51. Note that, the learning processing unit 41a may be realized by software or hardware. In addition, a part of the learning processing unit 41a may be configured by hardware.

The processor 41 reads out and executes the learning model 42b and a computer program 42a from the storage unit 42.

The learning model 42b is a neural network that outputs the remaining durable time in a case where an FFT signal intensity distribution on the basis of the vibration acceleration data is input. The learning model 42b includes an input layer, a hidden layer, and an output layer. The input layer includes a plurality of nodes to which the FFT signal intensity distribution is input. The hidden layer includes a plurality of intermediate layers including a plurality of nodes, and the nodes of the intermediate layers on an input side are connected to the nodes of the input layer. The output layer includes a node from which the remaining durable time is output. The respective nodes of the output layer are connected to the nodes of the intermediate layer on an output side.

The FFT signal intensity distribution is, for example, image data, and the learning model 42b is configured, for example, by a convolutional neural network (CNN).

The learning model 42b can be generated by performing machine learning by using training data including the FFT signal intensity distribution on the basis of the vibration acceleration data, and the remaining durable time. For example, the learning processing unit 41a of the processor 41 performs machine learning on the learning model 42b by optimizing a weight coefficient of the learning model 42b by error back propagation method using training data, an error gradient descent method, or the like.

The processor 41 can calculate the remaining durable time of the ball screw 51 by inputting the currently detected FFT signal intensity distribution into the learning model 42b.

According to the injection molding machine 1 according to Embodiment 2, it is possible to predict the lifespan of the ball screw 51 by the two-step determination algorithm as in Embodiment 1.

Note that, in Embodiment 2, description has been given of the learning model 42b of the CNN, but other known machine learning models such as neural networks, support vector machines (SVMs), and Bayesian networks other than CNN may be used to predict the failure time and the remaining durable time.

In addition, in Embodiment 2, description has been given of an example in which the lifespan prediction is performed by using the machine learning model, but the normal state determination processing of the ball screw 51 may be performed by using the machine learning model.

Reference Signs List

| 1 | Injection molding machine |
|---|---|
| 2 | Mold clamping device |
| 3 | Injection device |
| 4 | Control device (lifespan prediction device) |
| 5 | Drive device |
| 5a | Vibration acceleration sensor |
| 6 | Recording medium |
| 51 | Ball screw |
| 41 | Processor |

**Claims**

1. A lifespan prediction method, comprising:

   acquiring physical quantity data indicating a state of a component constituting an industrial machine;
   determining whether or not the component is normal on the basis of the acquired physical quantity data; and
   initiating lifespan prediction of the component in a case where determination is made as abnormal.

2. The lifespan prediction method according to claim 1,

   wherein the acquired physical quantity data and time data indicating an acquisition time of the physical quantity data are stored in association with each other,
   a function for estimating a variation over time of an index value correlated with a lifespan of the component is calculated on the basis of the acquired physical quantity data and the time data, and
   the lifespan of the component is predicted by using the calculated function.

3. The lifespan prediction method according to claim 1 or 2,

   wherein a determination is made as to whether or not the component is normal even after initiating the lifespan prediction, and
   in a case where the determination is made as normal, the lifespan prediction of the component is stopped.

4. The lifespan prediction method according to claim 3,

   wherein, in a case where the lifespan prediction is initiated, output of a lifespan prediction result is started, and
   in a case where the determination is made as normal, the output of the lifespan prediction result is stopped.

5. The lifespan prediction method according to claim 3 or 4,
   wherein, in a case where the determination is made again as abnormal after stopping the lifespan prediction, the lifespan prediction of the component is initiated again from a point of time when the determination is made again as abnormal.

6. The lifespan prediction method according to any one of claims 1 to 5,

   wherein the industrial machine is a molding machine including a ball screw, and
   a lifespan of the ball screw is predicted.

7. The lifespan prediction method according to claim 6, wherein the physical quantity data is data indicating a vibration acceleration of the ball screw, or a current or a driving sound of a motor that drives the ball screw.

8. A lifespan prediction device, comprising:

   an acquisition unit configured to acquire physical quantity data indicating a state of a component constituting an industrial machine; and
   an arithmetic operation unit,
   wherein the arithmetic operation unit
   determines whether or not the component is normal on the basis of the acquired physical quantity data, and
   initiates lifespan prediction of the component in a case where the determination is made as abnormal.

9. A computer program for causing a computer to execute processes of:

acquiring physical quantity data indicating a state of a component constituting an industrial machine;

determining whether or not the component is normal on the basis of the acquired physical quantity data; and

initiating lifespan prediction of the component in a case where the determination is made as abnormal.

# FIG.1

Control Device (Lifespan Prediction Device)

Operation Unit — 43

Display Unit — 45

Processor — 41

Acquisition Unit — 44

Storage Unit — 42

Computer Program — 42a

FIG.2

FIG.3

```
                        ┌──────────────┐
                        │    Start     │
                        └──────┬───────┘
    ┌──────────────────────────┤
    │   ┌─────────────────────────────────────┐ S111
    │   │   Acquire vibration acceleration data│
    │   └─────────────────────────────────────┘
    │   ┌─────────────────────────────────────────┐ S112
    │   │Store vibration acceleration data and time data│
    │   └─────────────────────────────────────────┘
    │   ┌─────────────────────────────────────┐ S113
    │   │       Fast Fourier transform         │
    │   └─────────────────────────────────────┘
    │                    S114
    │   YES    ◇   Normal?   ◇
    └──────────┘           │NO
    ┌─────────────────────►│
    │   ┌─────────────────────────────────────┐ S115
    │   │   Acquire vibration acceleration data│
    │   └─────────────────────────────────────┘
    │   ┌─────────────────────────────────────────┐ S116
    │   │Store vibration acceleration data and time data│
    │   └─────────────────────────────────────────┘
    │   ┌─────────────────────────────────────┐ S117
    │   │      Calculate state indicator       │
    │   └─────────────────────────────────────┘
    │   ┌─────────────────────────────────────┐ S118
    │   │     Calculate deterioration model    │
    │   └─────────────────────────────────────┘
    │   ┌─────────────────────────────────────┐ S119
    │   │         Lifespan prediction          │
    │   └─────────────────────────────────────┘
    │   ┌─────────────────────────────────────┐ S120
    │   │    Output lifespan prediction result │
    │   └─────────────────────────────────────┘
    │   ┌─────────────────────────────────────┐ S121
    │   │   Fast Fourier transform processing  │
    │   └─────────────────────────────────────┘
    │                    S122
    │   NO     ◇   Normal?   ◇
    └──────────┘           │YES
        ┌─────────────────────────────────────┐ S123
        │   Stop lifespan prediction processing│
        └─────────────────────────────────────┘
        ┌─────────────────────────────────────┐ S124
        │   Stop output of lifespan prediction result│
        └─────────────────────────────────────┘
```

FIG.4

FIG.5A

FIG.5B

FIG.6

FIG.7

4

Control Device (Lifespan Prediction Device)

43
Operation Unit

41
Processor

41a
Learning Processing Unit

45
Display Unit

44
Acquisition Unit

42
Storage Unit

42a
Computer Program

42b
Learning Model

6

## INTERNATIONAL SEARCH REPORT

| International application No. |
| --- |
| **PCT/JP2022/039975** |

| A. CLASSIFICATION OF SUBJECT MATTER |
| --- |
| *B22D 17/20*(2006.01)i; *B29C 45/17*(2006.01)i; *B29C 45/76*(2006.01)i<br>FI:  B29C45/76; B29C45/17; B22D17/20 Z |
| According to International Patent Classification (IPC) or to both national classification and IPC |

| B. FIELDS SEARCHED |
| --- |
| Minimum documentation searched (classification system followed by classification symbols)<br>    B29C45/00-45/84; B22D17/20; B29C45/17; |
| Documentation searched other than minimum documentation to the extent that such documents are included in the fields searched<br>    Published examined utility model applications of Japan 1922-1996<br>    Published unexamined utility model applications of Japan 1971-2022<br>    Registered utility model specifications of Japan 1996-2022<br>    Published registered utility model applications of Japan 1994-2022 |
| Electronic data base consulted during the international search (name of data base and, where practicable, search terms used) |

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2021-0080010 A (MOVIC LAB INC.) 30 June 2021 (2021-06-30) | 1-2, 8-9 |
| Y | claims, paragraphs [0030]-[0150], fig. 8 | 6-7 |
| A | | 3-5 |
| Y | JP 2000-238106 A (TOSHIBA MACHINE CO LTD) 05 September 2000 (2000-09-05)<br>claims | 6-7 |
| Y | JP 2017-149124 A (SUMITOMO HEAVY INDUSTRIES) 31 August 2017 (2017-08-31)<br>claims, paragraphs [0087]-[0089] | 6-7 |

| ☐ Further documents are listed in the continuation of Box C. | ☑ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |
| Date of the actual completion of the international search<br>**08 December 2022** | Date of mailing of the international search report<br>**20 December 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

18

**INTERNATIONAL SEARCH REPORT**
**Information on patent family members**

International application No.

**PCT/JP2022/039975**

| Patent document cited in search report | | | Publication date (day/month/year) | Patent family member(s) | Publication date (day/month/year) |
|---|---|---|---|---|---|
| KR | 10-2021-0080010 | A | 30 June 2021 | (Family: none) | |
| JP | 2000-238106 | A | 05 September 2000 | US 6332355 B1 claims | |
| JP | 2017-149124 | A | 31 August 2017 | EP 3210745 A1 claims, paragraphs [0085]-[0087] | |

Form PCT/ISA/210 (patent family annex) (January 2015)

**EP 4 474 076 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019166702 A